# EUROPEAN PATENT APPLICATION

(11) **EP 4 624 073 A1**
(43) Date of publication of application: **01.10.2025**
(21) Application number: 24173614.9
(22) Date of filing: 30.04.2024
(51) Int. Cl.: B22F 7/06, B22F 7/08, B22F 10/28, B22F 10/47, A47G 21/02, A47G 21/04, B23K 31/02, B25G 1/00, B25G 3/34, B26B 3/02, B26B 9/00, B33Y 10/00, B33Y 80/00, B22F 5/00

(54) **METHOD FOR OBTAINING A HYBRID CUTLERY PIECE AND THE RESPECTIVE CUTLERY PIECE**

(30) Priority: 26.03.2024 PT 2024119351
(71) Applicant: Universidade do Minho, 4704-553 Braga (PT); Belo Inox S.A, 4806-909 São Cláudio de Barco (PT)
(72) Inventor: CARNEIRO DE SOUSA MACHADO, Maria João, 4805-161 Caldas das Taipas (PT); VILELA PONTES, António José, 4800-058 Guimarães (PT); DO CÉU GRAMAXO OLIVEIRA SAMPAIO, Álvaro Miguel, 4800-058 Guimarães (PT); DA SILVA CASTRO SALGUEIRO, Julieta, 4806-909 Guimarães (PT)
(74) Representative: Patentree

(57) **Abstract**

The present description relates to a method for obtaining a hybrid metal cutlery piece by stamping and additive manufacturing, wherein the cutlery piece comprises a first part (1) previously obtained by cutting and stamping and a second part (2) obtained by additive manufacturing, wherein the first part (1) is a bowl, a blade, or tines of the cutlery piece, and wherein the second part (2) is a handle of the cutlery piece, said parts being joined on a joining surface. It further concerns to said cutlery piece.

## Description

### TECHINAL FIELD

The present description relates to a method for obtaining a cutlery piece and the respective piece. Particularly, it refers to a method for obtaining a hybrid metal cutlery piece through stamping and additive manufacturing, as well as the obtained respective piece.

### BACKGROUND

Additive manufacturing has been used in several fields. Cutlery products have already been developed through additive manufacturing; however, the main distinction lies in the fact that all these products were wholly designed using this method.

Patent document JP6746308B2 describes technologies that can be used to achieve this union in a hybrid design, precisely highlighting the most suitable technologies for that purpose. However, the document does not focus on the development of specific products, let alone products intended for the cutlery industry.

Regarding patent document WO2014011262 it relates to a hybrid core used in the manufacture of parts for turbine engines. The hybrid core is characterized by the combination of two distinct parts: a first part made of non-refractory metal and a second part made of refractory or non-refractory metal. The additive manufacturing process is used in the production of at least one of the parts, whether the first or the second.

Patent document GB2620652 describes a method for post-processing a part manufactured through additive manufacturing, such as 3D printing. The method involves providing the additively manufactured part, providing a fluid for post-processing the part in order to improve surface finish, wherein the fluid comprises at least one carboxylic ester, heating the fluid, and applying the heated fluid to the surface of the part. In contrast, in the solution provided herein, post-processing is entirely carried out using conventional cutlery methods, involving polishing and applying respective finishes to the parts, such as high gloss, gold, black titanium, among others.

Patent document US20230141426 describes a cutting tool having a blade comprising a base portion and a blade edge portion disposed along an end portion of the base portion, wherein: the base portion comprises a hollow body formed by sintering a first constituent material powder; the blade edge portion comprises a solid body formed by sintering a second constituent material powder; and a reinforcing wall is provided inside the hollow body at at least a portion of the cutting tool tip of the base portion.

Chen, L. (2017) "A cutlery set for stroke", Victoria University of Wellington, School of Design, describes obtaining cutlery through additive manufacturing. In this article, the piece is entirely obtained through additive manufacturing, specifically in direct metal laser sintering (DMLS).

These facts are described to illustrate the technical problem solved by the embodiments of the present document.

### GENERAL DESCRIPTION

Currently, there is a recognized need for innovation in the cutlery industry, utilizing additive manufacturing to complement traditional production methods.

The present description arises as a response to the continuous growth of the cutlery sector and the ongoing evolution in production methods through new technologies.

The proposed solution consists of developing hybrid cutlery pieces, wherein a first part is produced by conventional methods and a second part is produced through additive manufacturing. This approach allows combining the knowledge and established processes of the cutlery industry with the advantages offered by additive manufacturing, such as the freedom to design diverse models, simplification of labor, and reduction in the number of steps required for creating handles and upper parts of utensils, which can be a bowl, a blade, or tines.

The combination of these two distinct production processes in a synergistic manner allows for an evolution in the cutlery industry without imposing obstacles to established processes. The choice to incorporate additive manufacturing is based on the various advantages this approach provides, such as the freedom to design highly diversified models, the reduction in the number of production steps required, and the ability to produce multiple handles simultaneously.

In an embodiment, the integration of additive manufacturing for a second part of the cutlery piece with traditional production methods of a first part of the cutlery piece enables the creation of highly diverse cutlery pieces and fully explore the potential of this technology to meet the specific requirements of the cutlery industry.

In an embodiment, two combined methods are presented for obtaining the cutlery piece, wherein the first possibility involves creating a second part of the cutlery piece through powder bed fusion technology, specifically the direct metal laser sintering (DMLS) process, while the first part of the piece is obtained through traditional processes in the cutlery industry. Through this specific process, DMLS allows that when producing the second part it is welded at the same time as the first part, resulting in the piece requiring only post-processing upon completion of production, as it will be in a raw state.

In an embodiment, the traditional method comprises the following steps: the first part of the cutlery piece is manufactured from a bar or sheet of steel, particularly AISI 420 steel for the handle and AISI 304 for knife blades, spoon bowls, or fork tines, but it may vary. This step involves cutting between punches and dies and stamping between a mold. Subsequently, the obtained piece is sanded and polished, and in some cases, sharpening may be necessary.

In an embodiment, the first part of the cutlery piece comprises a stopper, from which the second part is produced. The stopper acts as support to initiate the construction of the second part, as it provides a solid base from which the fabrication of the second part of the piece can be initiated with precision.

In an embodiment, the first part has a stopper so that the second part can then have a support to begin production.

The present description further refers to a support, also referred to as JIG, intended to support the part that is obtained by the traditional method in a vertical orientation, to ensure they are properly secured and no deviation occurs during the production phase. Thus, the JIG support is divided into two parts and produced from a block of steel cut to specific dimensions. Subsequently, on the CNC machine, the block is measured and machined according to the project specifications, using different milling cutters at various stages of the process. Once the JIG is ready, the first part of the piece is placed inside the support, and any possible burrs of the first part are cut off.

The precise alignment between the start of the construction of the second part of the piece and the stopper of the first part of the cutlery piece obtained by the traditional method is possible due to the three-dimensional modeling of the JIG, which guides the machine for the exact production of the second part of the piece.

The use of this support serves multiple functions, as it not only positions the first part of the cutlery piece in the vertical orientation and ensures its fixation but also facilitates the alignment between the start of the construction of the second part in additive manufacturing and the first part.

For better results, the support has been modeled with precise measurements based on existing pieces, simplifying the alignment process. That is, the support comprises cavities inside to receive and sustain the first part of the cutlery piece obtained by the traditional method, wherein the dimensions of the cavities are precise, avoiding any gaps that may arise. Any misalignment during production between the first part and the second part of the cutlery piece can be corrected in post-processing in the cutlery, using sanding and polishing techniques.

In an embodiment, the support is made of steel.

For better results, in production, the first part of the piece should always be used in its raw state, as the second part also exits the machine in this state and requires the same post-processing.

For better results, the stopper has a flat surface to ensure a precise fitting. By flat, it means it should be perpendicular to the laser beam used for additive manufacturing.

For better results, the stopper must be (i) parallel to the construction base and, therefore, (ii) perpendicular to the laser beam, having a flat surface.

In an embodiment, the second part of the cutlery piece is made of stainless steel, preferably Uddeholm Corrax, specially developed for additive manufacturing, ensuring corrosion resistance and high hardness.

After the production of the second part, the support is removed, allowing for post-processing to ensure the final cutlery piece meets the desired quality standards.

Thus, the problem of joining the traditionally produced part of the piece to the second part manufactured by additive manufacturing is solved through the development of a precise JIG, the controlled production of the parts, and post-processing to ensure the final product's quality.

Alternatively, in the second option, production is independent for the traditionally obtained part of the piece, where the first part is produced traditionally, and the second part via additive manufacturing. The union between the two parts occurs in traditional production, using a common approach in hollow handle cutlery. Thus, the difference is that for this case, the use of JIG is not necessary since the connection between the first and second parts of the cutlery piece is made through the traditional method.

After the production of the second part through additive manufacturing, it is removed in its raw state, ready for the joining phase with the first part of the piece. The union between the first and second parts of the piece is carried out in the butt-welding machine, using the technique that promotes coalescence between the two pieces over their entire contact area between them. This process occurs through the heat generated by resistance to electrical current, using the steel of the handle to weld both parts effectively. Once the first and second parts are joined, post-processing is carried out to enhance the aesthetics and functionality of the final product.

For better results, the union occurs through the heat generated by resistance to electrical current. This electrical current is applied in a controlled manner, promoting fusion and coalescence between the steel of the handle and the head of the cutlery piece. This technique utilizes the steel of the second part of the piece, ensuring effective and durable welding. Precise control of heat and electrical current ensures a robust union between both parts, providing consistent quality.

Additionally, the hardness of the steel for the second part of the piece produced in additive manufacturing must be controlled to ensure that the values are as similar as possible, ensuring compatibility during the union process of the two parts of the cutlery piece. Thus, a uniform hardness is necessary to ensure the structural integrity and the final performance of the product.

Some of the main advantages are:
Addressing the need for innovation in the cutlery industry by integrating additive manufacturing with traditional production methods to create highly diverse pieces;
Combining the knowledge and established processes of the cutlery industry with the advantages offered by additive manufacturing, fully exploring the potential of this technology;
Providing freedom to design highly diversified models for knife handles, spoons, or forks, allowing for customized and innovative designs;
Combining different production processes synergistically, reducing the number of steps required for the creation of knives, spoons, or forks, optimizing time and resources involved in production;
Offering flexibility in production, allowing the choice between direct union in additive manufacturing or traditional production, according to the manufacturer's needs and preferences;
After production, all pieces undergo post-processing processes for final adjustments, ensuring the aesthetic and functional quality of the final product;
Offering flexibility and control in production, allowing the choice between different methods of union between the handle and the remaining part of the piece, adapting to the needs and requirements of the cutlery market.

The present description relates to a method for obtaining a hybrid metal cutlery piece by stamping [i.e., wherein a metal material in sheet or rod form is molded between a punch and a die] and by additive manufacturing [i.e., by selective deposition of successive layers of metal material on top of each other], wherein the cutlery piece comprises a first part previously obtained by cutting and stamping and a second part obtained by additive manufacturing, wherein the first part is a bowl, a blade, or tines of the cutlery piece, and wherein the second part is a handle of the cutlery piece, said parts being joined on a joining surface, wherein said method comprises the following steps:
providing a support to position the first part with the joining surface facing upwards;
placing said first part on said support;
depositing and sintering a metal material in successive layers directly onto the joining surface to obtain said second part.

In an embodiment, the first part comprises a stopper on which said joining surface is arranged to receive the second part.

In an embodiment, the support comprises a first plate and a second plate couplable to each other, wherein the support comprises at least one cavity formed between said plates and extending from a top of the support to receive and sustain said first part.

In an embodiment, the cavity is formed in one or both of said plates, particularly the support comprising fasteners, more particularly bolts, for joining said plates.

In an embodiment, the cavity of the support is configured so that when the first part is sustained on said support, the stopper protrudes from or is flush with a top surface of the support.

In an embodiment, the cavity has the inverse shape of said first part.

In an embodiment, the support comprises a plurality of cavities to receive and sustain a plurality of first parts, particularly wherein the plurality of cavities is distributed equidistantly.

The present description further relates to a method for obtaining a hybrid metal cutlery piece by stamping and additive manufacturing, wherein the cutlery piece comprises a first part previously obtained by cutting and stamping and a second part obtained by additive manufacturing, wherein the first part is a bowl, a blade, or tines of the cutlery piece, and wherein the second part is a handle of the cutlery piece, said parts being joined on a joining surface, wherein said method comprises the following steps:
depositing and sintering a metal material in successive layers to obtain said second part;
providing said first part;
welding said parts together by said joining surface [i.e., welding, meaning joining said parts by heating them to the melting point, applying pressure between them, to create a permanent union between the parts].

In an embodiment, the method comprises the additional step of removing excess material from said first part, particularly by sanding and/or polishing the first part.

In an embodiment, the method comprises the previous step of removing a metal burr from said first part, wherein said metal burr results from stamping.

In an embodiment, the deposition and sintering are by Direct Metal Laser Sintering (DMLS).

In an embodiment, the laser is applied perpendicularly to said joining surface.

In an embodiment, the method comprises a previous step of metal stamping the first part.

In an embodiment, said joining surface is a flat surface.

In an embodiment, the metal material is steel, preferably Uddeholm Corrax.

The present description also relates to a hybrid metal cutlery piece obtainable by the described method.

In an embodiment, the hybrid metal cutlery piece, from stamping and additive manufacturing, comprises:
a first metal part previously obtained by cutting and stamping, and
a second metal part obtained by additive manufacturing;

wherein the first part is a bowl, a blade, or tines of the cutlery piece;
wherein the second part is a handle of the cutlery piece;
wherein said parts are joined on respective joining surfaces; and
wherein the second part was obtained by depositing and sintering a metal material in successive layers directly onto the joining surface to obtain said second part.

In an embodiment, the piece is a fork, a knife, or a spoon.

### BRIEF DESCRIPTION OF THE DRAWINGS

For an easier comprehension, figures are herein attached, which represent preferred embodiments and do not intend to limit the object the present description.
**Figure 1****:** Schematic representation of an embodiment of a cutlery piece, namely a knife.
**Figure 2****:** Schematic representation of an embodiment of a knife wherein the blade **1** was obtained by the traditional method, the handle **2** was obtained by additive manufacturing, and the stopper **3** is visible.
**Figure 3****:** Schematic representation of an embodiment of knife blades.
**Figure 4****:** Schematic representation of an embodiment of a knife.
**Figure 5****:** Schematic representation of an embodiment of the stopper and its alignment.
**Figure 6****:** Schematic representation of an embodiment of a support.
**Figure 7****:** Schematic representation of an embodiment of a support with the second part extending from it.
**Figure 8****:** Schematic representation of an embodiment of the support with the blades inside and the handles extending from one end.
**Figure 9****:** Schematic representation of an embodiment of the support with the cutlery piece.
**Figure 10****:** Schematic representation of an embodiment of the mold with the cutlery piece.

### DETAILED DESCRIPTION

The present description relates to a method for obtaining a hybrid metal cutlery piece by stamping [i.e., wherein a metal material in sheet or rod form is molded between a punch and a die] and by additive manufacturing [i.e., by selective deposition of successive layers of metal material on top of each other], wherein the cutlery piece comprises a first part previously obtained by cutting and stamping and a second part obtained by additive manufacturing, wherein the first part is a bowl, a blade, or tines of the cutlery piece, and wherein the second part is a handle of the cutlery piece, said parts being joined on a joining surface; as well as to said cutlery piece.

The following concerns the obtention of a knife.

In an embodiment, a cutlery piece was obtained wherein the first part of the piece is the blade and the second part of the piece is the handle.

In an embodiment, both the handle and the blade of the knife are produced separately, with the handle being manufactured by means of additive manufacturing and the blade being produced by one of the traditional methods.

The main challenge of this solution is to ensure precise alignment between the blade and the handle during the manufacturing process, since they are distinct production methods. To address this, the blade can be used in its raw state, thus allowing for adjustments during post-processing.

The joining between the handle and the blade is carried out directly on the machine during the additive manufacturing process, using methods such as Direct Metal Laser Sintering (DMLS).

After production, the knife in its entirety, including the handle and the blade, undergoes post-processing for final adjustments and to ensure the aesthetic and functional quality of the final product.

Alternatively, the cutlery piece can be obtained such that the joining of the part obtained by additive manufacturing is done during traditional production.

In this alternative, the production of the blade and the handle is also carried out independently, with the blade being manufactured in a traditional manner and the handle through additive manufacturing.

The difference in this alternative is that the joining between the blade and the handle occurs during traditional production, using common methods in hollow handle cutlery, instead of being performed directly on the machine during the additive manufacturing process.

The connection between the handle and the blade is achieved through welding on the butt-welding machine, using the handle's own steel to weld the two parts together.

As in the first solution, after the joining of the parts, the piece undergoes post-processing processes for final refinement and to guarantee the quality of the final product.

A viable alternative is to replace the material of the handles with polymer, while maintaining the additive manufacturing process.

Another possibility would be to apply this same process to the molds for the production of cutlery, promoting adjustments that would make the process more efficient and refined, reducing the need for labor.

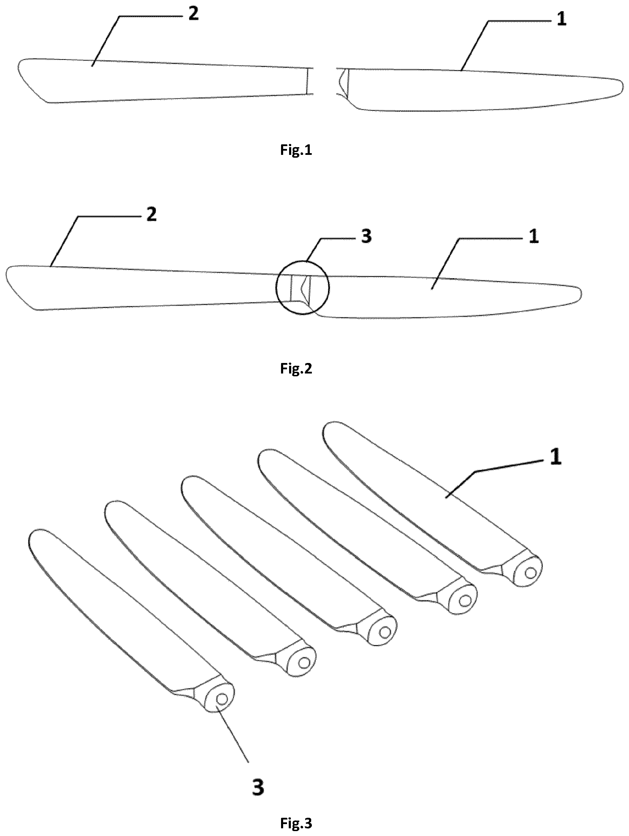

In an embodiment, **Figure 1** depicts an embodiment of a knife wherein **1** is the first part, namely the blade, obtained by the traditional method, and **2** is the second part of the piece, namely the handle, obtained by additive manufacturing.

In an embodiment, **Figure 2** depicts an embodiment of a knife wherein **1** is the blade obtained by the traditional method and **2** is the handle obtained by additive manufacturing. This figure also shows the joining surface between the blade and the handle, which is arranged on the stopper **3**.

In an embodiment, **Figure 3** depicts a plurality of knife blades obtained by the traditional method, namely stamping.

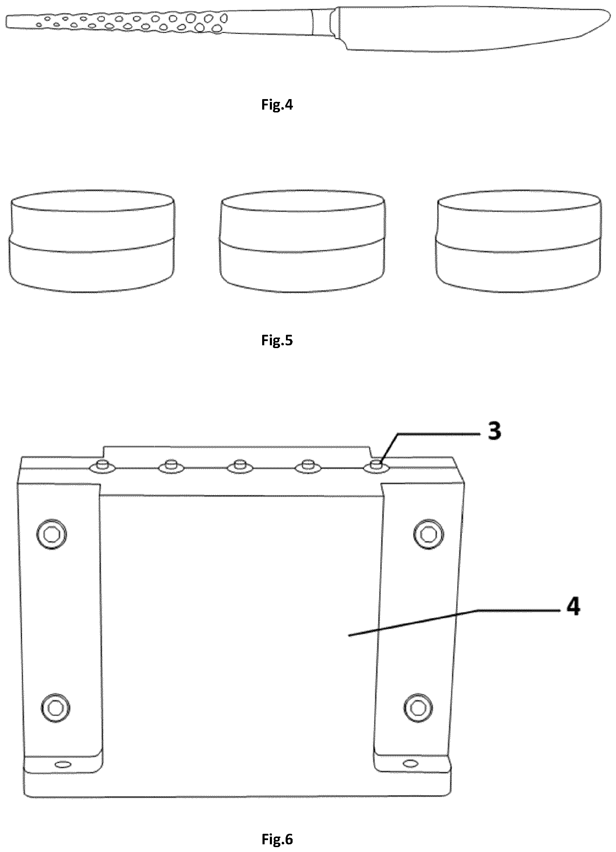

In an embodiment, **Figure 4** depicts an embodiment of a knife wherein the blade was produced by the traditional method and the handle by additive manufacturing.

In an embodiment, **Figure 5** depicts three stoppers.

In an embodiment, **Figure 6** depicts the support **4** supporting the first part of the piece, the blades, for the production of the second part of the cutlery piece, particularly the handles.

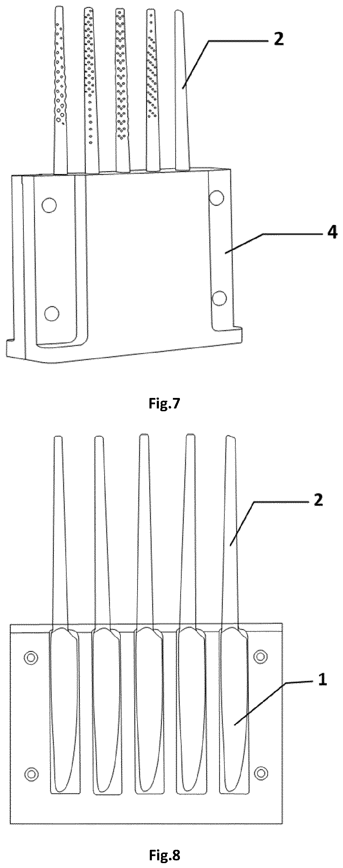

In an embodiment, **Figure 7** depicts the support **4** wherein inside thereof are the first parts **1** of the cutlery pieces, particularly the knife blades, and in an upper top of said support 4, are the second parts **2** of the piece, namely the handles, which are produced by additive manufacturing.

In an embodiment, **Figure 8** depicts the support open, with the knife blades which are arranged in the cavities, the stoppers and the handles extending from the stoppers being visible.

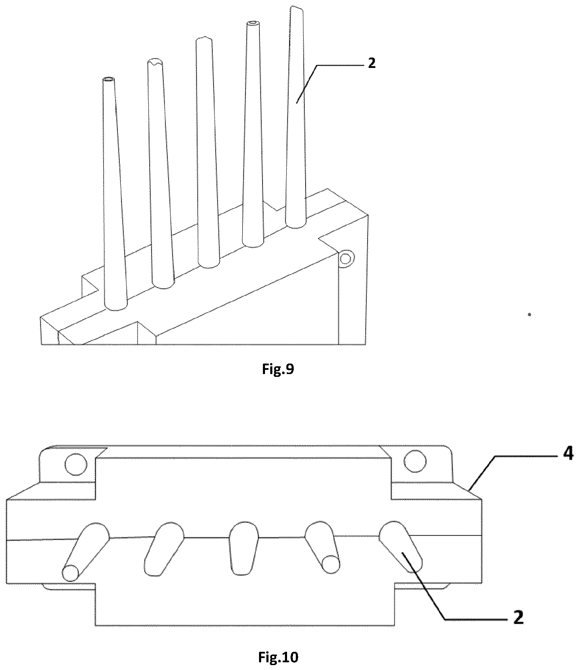

In an embodiment, **Figure 9** depicts the handles, with various geometries extending from the top of the support.

In an embodiment, **Figures 6****,** **7****,** **8****,** **9, and 10** depict the support, JIG. This support comprises a plurality of cavities inside it which have the inverse shape of said first part. The plurality of cavities receives a plurality of first parts, in this example, blades, and is closed to produce the handle by additive manufacturing.

The term "comprises" or "comprising" when used in this document is intended to indicate the presence of the features, elements, integers, steps, and components mentioned but does not preclude the presence or addition of one or more other features, elements, integers, steps, and components, or groups thereof.

The present invention is not, of course, restricted to the embodiments described in this document, and a person with average knowledge in the art will foresee many possibilities for modifying it and substituting technical features with equivalent ones, depending on the requirements of each situation, as defined in the appended claims.

The following claims define further embodiments of the present description.

## Claims

1. Method of obtaining a hybrid metal cutlery piece by stamping and additive manufacturing, wherein the cutlery piece comprises a first part (1) previously obtained by cutting and stamping and a second part (2) obtained by additive manufacturing, wherein the first part (1) is a bowl, a blade, or tines of the cutlery piece, and wherein the second part (2) is a handle of the cutlery piece, said parts being joined on a joining surface, wherein said method comprises the following steps:
providing a support (4) for positioning the first part (1) with the joining surface facing upwards;
placing said first part (1) on said support (4);
depositing and sintering a metal material in successive layers directly onto the joining surface to obtain said second part (2).

2. Method according to the previous claim, wherein the first part (1) comprises a stopper on which said joining surface (3) is arranged to receive the second part.

3. Method according to any of the previous claims, wherein the support comprises a first plate and a second plate couplable to each other, wherein the support comprises at least one cavity formed between said plates and extending from a top of the support to receive and sustain said first part (1).

4. Method according to any of the previous claims, wherein the cavity is formed in one or both of said plates, particularly the support (4) comprising fasteners, more particularly bolts, for joining said plates, preferably wherein the cavity of the support is configured so that when the first part (1) is sustained on said support (4), the stopper protrudes from, or is flush with, a top surface of the support.

5. Method according to any of the previous claims, wherein the cavity has the inverse shape of said first part (1).

6. Method according to any of the previous claims, wherein the support comprises a plurality of cavities to receive and support a plurality of first parts (1), particularly wherein the plurality of cavities is distributed equidistantly.

7. Method of obtaining a hybrid metal cutlery piece by stamping and additive manufacturing, wherein the cutlery piece comprises a first part (1) previously obtained by cutting and stamping and a second part (2) obtained by additive manufacturing, wherein the first part (1) is a bowl, a blade, or tines of the cutlery piece, and wherein the second part (2) is a handle of the cutlery piece, said parts being joined on a joining surface, wherein said method comprises the following steps:
depositing and sintering a metal material in successive layers to obtain said second part (2);
providing said first part (1);
welding said parts together by said joining surface.

8. Method according to any of the previous claims, comprising the additional step of removing excess material from said first part (1), particularly sanding and/or polishing the first part, and optionally comprising the previous step of removing a metal burr from said first part, wherein said metal burr results from stamping.

9. Method according to any of the previous claims, wherein the deposition and sintering is by direct metal laser sintering (DMLS), in particular the metal material is steel.

10. Method according to any of the previous claims, wherein the laser is applied perpendicularly to said joining surface (3).

11. Method according to any of the previous claims, wherein it comprises a previous step of metal stamping of the first part (1).

12. Method according to any of the previous claims, wherein said joining surface is a flat surface.

13. Hybrid metal cutlery piece obtainable by the method according to any of the previous claims.

14. Hybrid metal cutlery piece, obtainable by stamping and additive manufacturing processes, wherein the cutlery piece comprises:
a first metal part (1) previously obtained by cutting and stamping, and
a second metal part (2) obtained by additive manufacturing;
wherein the first part (1) is a bowl, a blade, or tines of the cutlery piece;
wherein the second part (2) is a handle of the cutlery piece;
wherein said parts are joined on respective joining surfaces (3); and
wherein the second part (2) was obtained by depositing and sintering a metal material in successive layers directly onto the joining surface to obtain said second part (2).

15. Cutlery piece according to any of the previous claims 13 and 14, wherein the piece is a fork, a knife, or a spoon.
